# EUROPEAN PATENT APPLICATION

(11) **EP 2 214 008 A2**
(43) Date of publication of application: **04.08.2010**
(21) Application number: 09180674.5
(22) Date of filing: 23.12.2009
(51) Int. Cl.: G01N 27/49, G01N 27/28

(54) **Electrochemical gas sensor**

(30) Priority: 08.01.2009 GB 0900254; 24.11.2009 US 625258
(71) Applicant: Life Safety Distribution AG, 8610 Uster (CH)
(72) Inventor: Cowburn, Tony, Hants, SP53 3HD (GB); Cutler, Stuart, Southampton, SO31 6BZ (GB); Kelly, Martin Jonathan, Clanfield, Hampshire PO8 0NT (GB)
(74) Representative: Buckley, Guy Julian

(57) **Abstract**

An electrochemical gas sensor has a hollow housing with multi-layer walls. A first layer of the walls has a selected water vapour transport rate. A second layer of the walls has a lower water vapour transport rate than the selected rate. The housing can be formed by first and second moulding processes.

## Description

### Field of the Invention

The present invention relates to electrochemical gas sensors for the detection of a target gas in an atmosphere. For the most part, the description hereinafter will focus on the example of an oxygen sensor. However, as detailed below, the principles of the invention are equally applicable to other types of electrochemical gas sensor, including oxygen pumps and toxic gas sensors.

### Background of the Invention

Amperometric electrochemical oxygen sensors traditionally comprise a gas diffusion working electrode (Agas-sensing electrode@), often based on a graphite/platinum catalyst dispersed on PTFE tape. Oxygen is reduced at this cathode whilst a balancing oxidation takes place at a consumable anode (Acounter electrode@), most frequently made of lead (Pb). The electrodes are held within an outer housing which contains a liquid electrolyte capable of supporting the relevant reactions, such as aqueous potassium acetate. The gas under test typically enters the housing through a controlled diffusion access which regulates the ingress of oxygen into the cell. By arranging that all oxygen is reacted at the cathode, the electrical output of the sensor may be directly related to the ambient oxygen concentration. Such principles are well known and have been described for example in 'Liquid Electrolyte Fuel Cells', B S Hobbs, A D S Tantram and R Chan-Henry, Chapter 6 in 'Techniques And Mechanisms In Gas Sensing', Eds P T Moseley, J O W Norris and D E Williams, Adam Hilger, 1991.

Electrochemical gas sensors have a finite lifetime which depends on a number of factors. For oxygen sensors, the primary factor is the consumption of electrode material (e.g. a consumable lead counter electrode). All types of sensor can also suffer from a gradual loss of activity of one or both electrodes, 'drying out ' of the electrolyte, or limited filter life. Clearly it is desirable for the sensor's working lifetime to be as long as possible but moreover it is important that any particular sensor type will consistently continue to work for at least the indicated lifetime. Early failures lead to the need for more frequent sensor replacement, as well as increased checking and monitoring of sensor performance and, ultimately, a loss in confidence in the sensor.

In the case of oxygen sensors, it has conventionally been found that the consumption of the lead electrode is the lifetime-limiting factor. This has been controlled by the use of a diffusion barrier to limit the amount of gas which can enter the sensor and drive the cell reaction. To a lesser extent, conventional sensors could also suffer from variations in the hydration state of the electrolyte, due to water vapour transfer through the apertures in the housing (which may include a vent as described in WO-A-04/031758, in addition to the gas entry aperture). However, with the dimensions of the apertures being kept small to limit the consumption of the electrode, drying-out of the electrolyte was not found to be a significant problem.

As the technology has developed, the size of such sensors has been significantly reduced. For example, the MICROceL™ oxygen sensor produced by City Technology Limited of Portsmouth, UK is of substantially reduced footprint and volume compared with a traditional "metal can" type sensor. Unlike traditional sensors, the MICROceL™ uses a plastics housing which helps achieve its small size. It has also been necessary to reduce the size of the consumable anode and so reduce the amount of gas let into the sensor by using smaller apertures (capillaries), optionally in combination with diffusion barrier membranes. In practice, the diameter of a typical gas entry capillary has been reduced by a factor of around two. However, due to mechanical constraints, it becomes difficult to produce capillaries of much smaller diameter and so there is a limit on the minimum capillary size achievable, and therefore on the minimum size of the consumable anode. As such, even in a small sensor there is still a requirement for a reasonably large reservoir containing the consumable anode.

It has been found that such sensors can suffer early failure, before the predicted lifetime has expired, especially in hot and/or dry environments. Typically, these failures take the form of either an unexpectedly high output signal, or a sluggish response time. It has been deduced that the high output signal is due to drying-out of the electrolyte, leading to a loss of electrolyte within the sensor bulk, so allowing gas to diffuse in to the sensing electrode in the gaseous (rather than liquid) phase, from the capillary and/or the vent. Since gas phase diffusion is several orders of magnitude faster than liquid phase diffusion, the output signal is greatly increased. Similarly, a sluggish response time is caused by a lack of electrolyte in the region of the consumable electrode, preventing the reaction from occurring. The loss of electrolyte has been confirmed by weight tests.

Modelling and practical tests have demonstrated that the water vapour transfer through the gas entry capillary (and vent, if present) is minimal. It is believed that the size reduction of the sensor as a whole, and in particular the reduced capillary dimensions, have lead to water vapour transfer through the apertures no longer being the limiting factor. Instead, the present inventors have deduced that water vapour transfer through the walls of the sensor housing themselves has become dominant. This could be addressed by forming the housing from a material such as metal which is largely impermeable to water. However, this would require a complete redesign of the sensor and the techniques used in its manufacture, to which the use of certain plastics is key. A return to metal casings would also likely lead to an increase in sensor size. An alternative approach would be to increase the thickness of the housing walls. However, this would either increase the sensor footprint and/or decrease the internal space available for the consumable anode, so this option is also undesirable.

### Brief description of the Drawings

Examples of electrochemical gas sensors and method of manufacture will now be described and contrasted with conventional sensors, with reference to the accompanying drawings, in which:-

Figure 1 is a graph showing the percentage electrolyte loss in a typical conventional electrochemical gas sensor over time, under various temperature and humidity conditions;

Figure 2 is a graph showing the dependence of the sensor lifetime where failure is due to drying out of the electrolyte (i.e. the time taken by a typical conventional electrochemical gas sensor to reach 50% electrolyte depletion) on increasing cavity wall thickness, where the internal dimensions of the cavity are maintained constant;

Figure 3 is a graph showing the variation of sensor lifetime where (i) failure is due to anode consumption, and (ii) failure is due to drying out of electrolyte, with cavity wall thickness, where the internal dimensions of the cavity decrease as the wall thickness increases;

Figure 4 shows a sensor according to a first embodiment of the invention in exploded view;

Figures 5 a, b and c show three exemplary sensing circuits that may be used with the sensor of Figure 4;

Figure 6 shows the assembled sensor of Figure 4 in cross section;

Figure 7 shows the projected lifetime of an electrochemical gas sensor where failure is due to drying out, varying with wall thickness for (i) ABS walls, and (ii) PP/HDPE walls;

Figure 8 shows the projected lifetime of the sensor of Figures 4 varying with thickness of the layer where (i) failure is due to anode consumption, and (ii) failure is due to drying out of electrolyte; and

Figure 9 shows an expanded cross section illustrating certain components of a sensor according to a second embodiment of the invention.

### Detailed Description of the Invention

In accordance with the present invention, an electrochemical gas sensor for the detection of a target gas in an atmosphere comprises a gas sensing electrode and a counter electrode disposed within a housing, and means for connecting the gas sensing electrode and the counter electrode to a sensing circuit, the housing being provided with an aperture for gas ingress and comprising walls defining a cavity containing, in use, electrolyte in fluid communication with the gas sensing electrode and counter electrode, wherein at least a portion of the walls defining the cavity comprise a first layer integral to the housing and a second layer thereon having a lower water vapour transport rate than that of the first layer, such that in use water vapour transport from the electrolyte to the atmosphere through the walls of the housing is reduced.

By providing the housing walls with a layer or coating of a material with a relatively low water transport rate, it becomes possible to reduce the dehydration of the electrolyte through the walls without compromising the sensor design. In particular, the body of the housing can be made of the necessary plastics material (such as ABS) for compatibility with manufacturing requirements, with the second layer acting to reduce water vapour transport. As such, depletion of the electrolyte can be substantially reduced (relative to conventional sensors) whilst retaining a small sensor footprint and sufficient internal capacity. The lifetime of the sensor is prolonged, and in addition it becomes possible to use the sensor in more extreme environments (i.e. hotter and/or drier) than previously possible.

In order to achieve a reduction in electrolyte depletion, it is not necessary for the second layer to cover the entirety of the cavity walls, although this may be desirable in some cases. In many embodiments, however, it is preferred that the portion of the walls having the first and second layers comprises at least 50% of the walls defining the cavity, preferably at least 75%, still preferably at least 90%. The more of the cavity walls is coated with the second layer, the greater the reduction in water vapour transfer through the housing.

One reason that it may be desirable to leave certain parts of the cavity walls uncoated is where these parts are to undergo particular manufacturing processes, such as joining, cutting or otherwise, which are tuned to perform best when applied to the material making up the main body of the housing (i.e. the material of the first layer). Therefore, preferably, the portion of the walls having the first and second layers omits predetermined processing regions of the walls. Some or all of the remaining regions of the walls can include the second layer. In particularly preferred embodiments, the processing regions comprises regions of the housing which, in use, form joints with one or more other components, preferably heat welded joints or ultrasonic welded joints. In other preferred embodiments, the processing regions may additionally or alternatively comprise regions of the housing which, in use, are laser-drilled.

The second layer could be provided on either surface of the cavity wall, or even inside the cavity wall itself. In certain preferred embodiments, the second layer of the wall is inboard of the first layer. This has the advantage that the second layer is protected from external influences and, in particular, potential damage during handling. This is especially the case where the second layer is very thin. However, in other cases it is preferable that the second layer of the wall is outboard of the first layer. This may be advantageous if the second layer is less thin, to avoid any reduction in anode capacity. Depending on the material and processing technique used to form the second layer, it may also be easier to apply the layer to the outside of the cavity walls rather than the interior.

So as to avoid any significant increase in the sensor dimensions, it is preferable that the second layer is thinner than the first layer of the wall in the portion of the walls having the first and second layers. It should be noted that the thickness of the cavity walls may vary around the periphery of the cavity: for example, the side walls are typically thinner than the walls formed by a cap closing the top of the cavity. The second layer is preferably thinner than the first layer of the walls at any position, but this need not be the case. Preferably, the second layer is less than half as thick as the first layer of the wall in the portion of the walls having the first and second layers.

In particularly preferred embodiments, the second layer of the wall has a thickness of less than 1 mm, preferably between 0.05 mm and 0.5 mm, still preferably between 0.1 mm and 0.4 mm, most preferably approximately 0.2 mm. The thinner the second layer, the lesser the impact on the sensor dimensions. However, too thin a layer may be ineffective at reducing water vapour transport, and can also be difficult to produce, depending on the manufacturing technique. The thickness of the second layer may vary across the wall as desired.

It has been found preferable that the first layer of the wall in the portion of the walls having the first and second layers has a thickness of between 0.5 mm and 2.5 mm, preferably around 0.85 mm. This thickness will however depend largely on the type and design of the sensor. As noted above, the thickness of the first layer may vary.

Advantageously, the water vapour transport rate of the second layer is at least around 10 times lower than that of the first layer, preferably at least around 40 times lower. The lower the water vapour transport rate, the thinner the second layer need be in order to be effective.

The second layer has been found to provide certain further advantages, since it can be arranged to assist in forming electrical connections within the sensor. Thus in a particularly preferred embodiment, the second layer comprises an electrically conductive material and is electrically connected to the counter electrode, forming part of the means for connecting the electrodes to the sensing circuit. In this case the layer is preferably formed on the internal wall of the cavity, replacing the metal cage which is conventionally used to make an electrical connection with the anode in previous designs.

Preferably, the housing and first layer of the walls comprises acrylonitrile butadiene styrene (ABS) or a polyphenylene oxide (PPO) / polystyrene (PS) blend. These materials have been found to have the desired properties for manufacture of the sensor, and in particular are well adapted for ultrasonic welding and laser drilling.

Advantageously, the second layer of the walls comprises any of: a liquid crystal polymer (LCP), polypropylene (PP), high density polyethylene (HDPE), polyphenylene ether (PPE), a metal, preferably copper or nickel, or a metal alloy. These materials have suitably low water vapour transport rates and can be applied in the form of a layer to the housing body.

The second layer may be formed using any technique appropriate to the material and sensor configuration. For example, any thin film deposition technique such as vapour deposition or sputtering could be employed. However, in a particularly preferred embodiment, the second layer is overmoulded onto the first layer of the walls. This has been found to be particularly convenient since the main body of the housing (i.e. the first layer of the walls) can also be formed by moulding, the second layer being applied in a second moulding step.

In certain preferred embodiments, at least the counter electrode is contained within the cavity such that in use it is at least partly immersed in electrolyte. This is generally the case, for example, in sensors having consumable electrodes, such as the aforementioned oxygen sensor. In other preferred embodiments, the housing contains one or more separators adapted to hold electrolyte therewithin and to supply electrolyte to the gas sensing electrode and the counter electrode, and the cavity comprises a reservoir containing electrolyte in use, the sensor further comprising a wick for conveying electrolyte from the reservoir to the or each separator. This is often the case, for example, in toxic gas sensors.

Preferably, the gas sensing electrode comprises a catalyst dispersed on a backing tape, wherein the catalyst preferably comprises graphite and/or platinum, and the backing tape preferably comprises PTFE.

Advantageously, the counter electrode comprises a consumable electrode, the consumable electrode preferably comprising lead (Pb), zinc (Zn), copper (Cu) or iron (Fe). In alternative embodiments, the counter electrode could comprise a catalyst dispersed on a backing tape, akin to the above-described gas sensing electrode.

The sensor may operate with only two electrodes, the counter electrode also acting as a reference electrode, but in other preferred embodiments, the sensor further comprises a reference electrode, in which case the sensor can operate on the three electrode principle.

Preferably, the aperture for gas ingress comprises a diffusion limiting barrier, such as a capillary or a membrane.

The present invention also provides a method of manufacturing an electrochemical gas sensor for the detection of a target gas in an atmosphere, the method comprising:
forming a cavity portion of a housing, comprising integral walls defining a cavity;
applying a layer to cover at least a portion of the walls defining the cavity, the layer having a lower water vapour transport rate than that of the integral walls;
providing a gas sensing electrode and a counter electrode within the housing, and means for connecting the gas sensing electrode and the counter electrode to a sensing circuit,
at least partially filling the cavity with electrolyte; and
closing the cavity by providing a lid portion of the housing, comprising an aperture for gas ingress, and joining the lid portion to the cavity portion of the housing;
whereby, in use, water vapour transport from the electrolyte to the atmosphere through the walls of the housing is reduced.

As described above, by applying a layer of material having a lower water vapour transport rate, dehydration of the electrolyte is reduced, whilst not compromising the mechanical performance of the housing.

Advantageously, the cavity portion (e.g. body) of the housing is formed by a first moulding step, preferably injection moulding. In a particularly preferred embodiment, the layer (having a lower water vapour transport rate) is applied by a second moulding step, preferably injection moulding. In alternative embodiments, the layer is applied by a deposition process, preferably vapour deposition or sputtering.

Preferably, the method of manufacturing an electrochemical gas sensor is used to manufacture an electrochemical gas sensor as defined above.

As discussed above, electrochemical gas sensors can suffer failure due to drying out of the electrolyte due to water vapour transfer through the housing walls. For small sensors such as the MICROceL™ oxygen sensor by City Technology Limited of Portsmouth, UK, water vapour loss through apertures such as the capillary or vent is relatively insignificant.

It has been found that failure occurs for both 'vented' and 'non-vented' sensors when the original electrolyte volume has depleted by about 50%. The failure mechanism for 'vented' sensors is usually a high signal output (due to oxygen breaking through from the vent) whereas the failure mechanism for non-vented sensors is typically extended response time and/or loss of output.

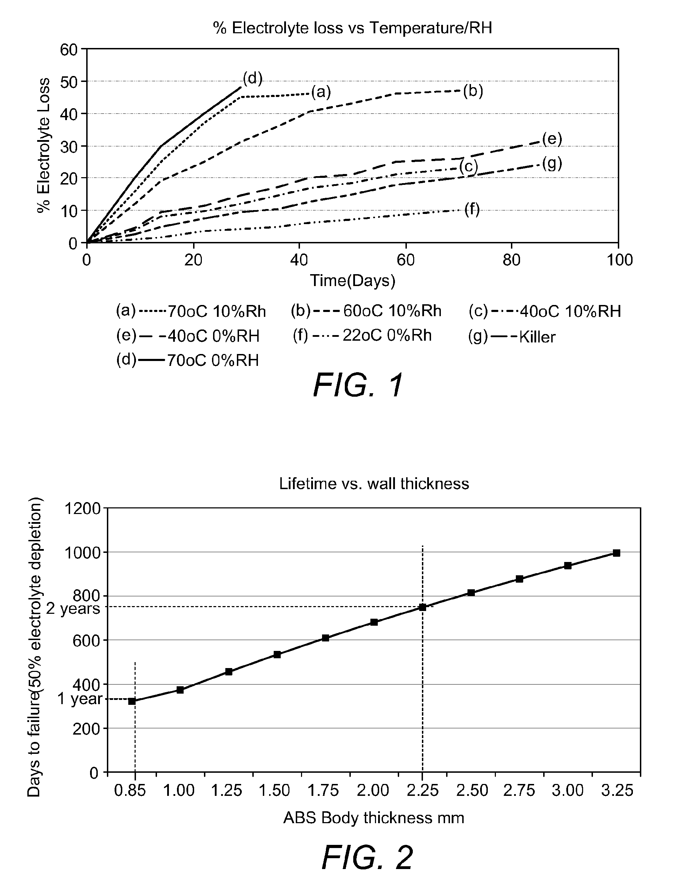

Figure 1 shows the approximate electrolyte drying-out rates for a conventional MICROceL™ electrochemical oxygen sensor having a plastics housing, determined in practical testing at various temperatures and humidity. Projecting the trends at various conditions provides an outlook of around a 1-year lifetime at 22 degrees C & 0%RH (relative humidity). The target lifetime for this type of product is 2 years. Further work at 30%RH indicates around a 2-year lifetime at 22C & 30%RH, or approximately 220 days at 40C & 30%RH.

As mentioned above, one way to reduce the loss of electrolyte through the walls of a sensor is to increase the wall thickness. Modelling of the electrolyte loss using water vapour transfer rates, and details of the mechanical design (thickness and surface area of walls in sensor), with adjustments for temperature, humidity and expected variation in transfer rate of potassium acetate electrolyte compared to water, has produced the result illustrated in Figure 2 for a conventional sensor with a housing made of ABS, which has a water vapour transfer rate of around 5.88 g mm/m²/day, at 37 degrees C and 90% RH. This shows the number of days until the electrolyte is depleted by 50%, as it varies with wall thickness, and assuming that the increase in wall thickness does not affect the internal dimensions of the sensor. It will be seen that, to achieve a 2 year lifetime at 22C and 0%RH, an ABS wall thickness of around 2.25mm is required.

However, existing conventional sensors have a wall thickness of around 0.85mm, so the wall dimensions would need to be more than doubled in order to achieve the desired effect. This simple model assumes that the internal volume of the sensor (and therefore the electrolyte volume and available space for the anode) is unchanged, so any additional wall thickness involves making the external size of the sensor larger. Increasing the overall size of the sensor (e.g. by around 2.8mm in diameter to achieve a 2-year life), would have major implications for the instrument and is not desirable.

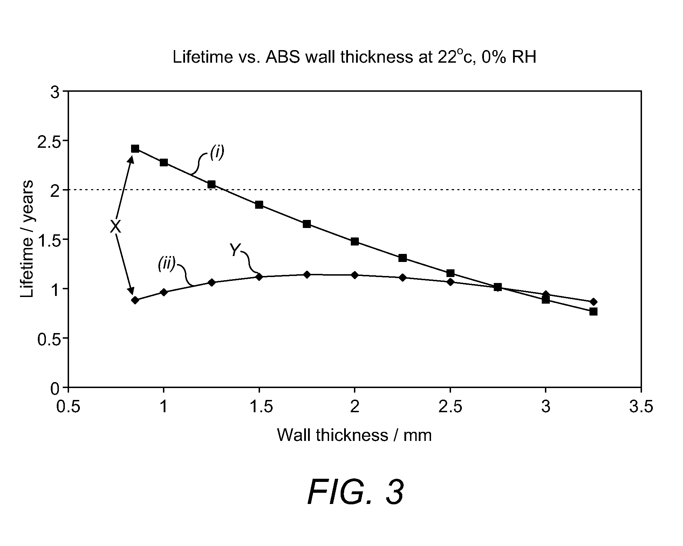

As an alternative, the internal geometry of the sensor could be reduced to allow for the additional wall thickness. This option will clearly impact on the available volume for the consumable anode and electrolyte in the sensor. Modelling of these options is represented in Figure 3, in which line (i) shows the projected lifetime where failure is due to anode consumption, and line (ii) shows the projected lifetime where failure is due to drying out. The points marked "X" represent the situation for conventional sensors, with failure occurring at around 1 year due to drying out. Increasing the wall thickness achieves a small increase in the lifetime but this reaches a peak at around 1.7 mm, marked Y, after which the reduction in the volume of electrolyte contained in the cavity leads to the reversal of any benefits. The target 2 year lifetime is still not achievable.

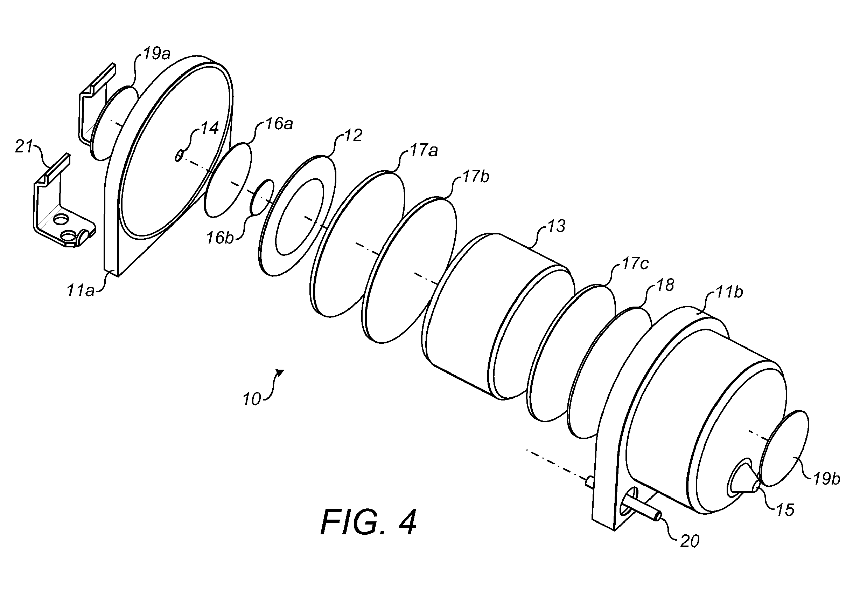

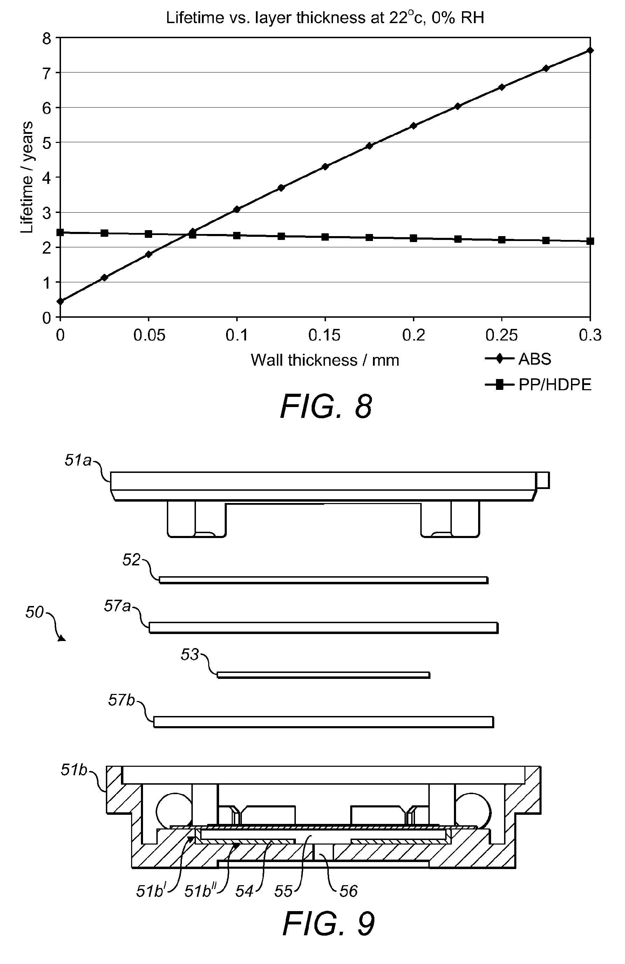

Figures 4, 5 and 6 show an embodiment of an electrochemical gas sensor 10 in accordance with the present invention. In the example given, the sensor is an oxygen sensor, but the invention could equally be applied to other sensor types, including toxic sensors. An example relating to a toxic sensor is discussed below in conjunction with Figure 9.

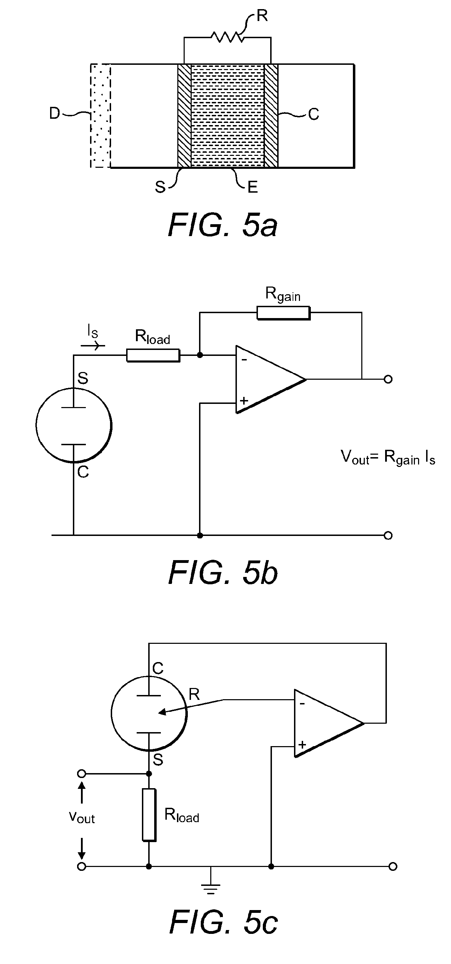

The oxygen sensor 10 comprises a plastics housing 11 formed of lid 11a and body 11b, which when assembled, are joined to one another (e.g. by ultrasonic welding) and contain the electrode assembly therewithin. Lid 11a includes an aperture 14 therethrough for gas ingress, typically comprising a capillary and/or diffusion barrier membrane in order to limit the amount of gas entering the sensor. The electrode assembly essentially comprises a gas sensing electrode 12 and a counter electrode 13, each of which is electrically connected in use to a sensing circuit, for example via conductive connection pins 20 and contact clips 21. Figure 5 shows three examples of suitable sensing circuits in which the sensor 10 could operate. Figure 5a shows a basic schematic circuit in which the sensing electrode S (= gas sensing electrode 12) and counter electrode C (= anode 13) are connected with a load resistor R between them. The electrolyte E provides ionic communication between the two electrodes whilst gas access to the sensing electrode is controlled by diffusion barrier D. In use, the current passing through load resistor R is monitored to determine the concentration of target gas reacting at the sensing electrode. In practice, a two-electrode potentiostatic circuit such as that shown in Figure 5b may be used. The three-electrode circuit shown in Figure 5c is more often used with certain toxic gas sensors which employ separate reference and counter electrodes. Further information concerning suitable signal measurement techniques may be found in "Techniques and Mechanisms in Gas Sensing", eds. PT Moseley, J Norris and DE Williams, Chapter 6, published 1991 by IOP Publishing Ltd.

In use, the gas sensing electrode 12 and counter electrode 13 are each in contact with a liquid electrolyte, typically aqueous potassium acetate or another ionically conducting aqueous electrolyte. The electrolyte is contained within a cavity defined by housing body 11b, which also holds the counter electrode 13. Separator layers 17a, 17b and 17c, which are electrolyte-permeable, may be provided above and below the counter electrode 13 in order to supply electrolyte to the gas sensing electrode 12 whilst preventing direct contact between the gas sensing and counter electrodes. The separators 17 may be made of glass fibre, for example.

The gas sensing electrode 12 typically comprises a catalyst such as platinum or carbon, supported on a PTFE membrane. Conductive leads (not shown) are provided to electrically connect the catalytic area to the connection pins 20. The counter electrode 13 here takes the form of a consumable anode which will be oxidised as the cell reaction progresses. Typically, the anode 13 comprises a volume of porous material, such as lead wool, having a large surface area so as to avoid early passivation of the material.

In other sensor types, such as toxic gas sensors, the counter electrode may comprise a catalyst mounted on a PTFE backing tape, in the same manner as the gas sensing electrode 12.

The sensor 10 may also include a number of optional components, such as:
- a bulk flow disc 16b, adhered to the inside of lid 11a by an adhesive disk 16a. The bulk flow disk may be provided in order to restrict bulk flow of gas into the sensor and in particular reduce pressure transients and temperature-induced pressure transients;
- a vent 15 and vent membrane 18. As detailed in WO-A-04/031758, a vent 15 may be provided in the form of an aperture through the body of the cavity in order to assist in the avoidance of pressure differentials by enabling the passage of gas into and out of the sensor 10. To prevent escape of liquid through the vent, a gas porous but electrolyte impermeable (e.g. PTFE) membrane 18 may be provided. This is typically heat-sealed to the interior of the body 11b. To avoid gas access through the vent becoming obstructed should the anode expand during operation (e.g. due to oxidation), the counter electrode 13 may be spaced from the vent by providing the electrode 13 with a recess 13a; and
- outboard of the sensor housing 11, a dust membrane 19a and vent protection membrane 19b may be provided to protect the aperture 14 and vent 15 from dust and moisture.

The geometry of the housing body 11b will depend on the sensor design. In this example, a single large internal cavity is defined, for containing the counter electrode 13, immersed in electrolyte. In other sensor types, the geometry of the housing body 11b may be more complex, to provide for an electrolyte reservoir separate from the electrode stack, with wicking components for transport of electrolyte between the two.

In the present example, the cavity is defined by side walls 11b", which are substantially cylindrical, and flat circular walls at either end, the upper wall being provided by housing lid 11a, and the base wall 11b'" being provided by the housing body 11b. Housing body 11b also comprises a flange 11b' encircling the side walls 11b" at their upper edge, which provides a joining surface for welding to the lid 11a.

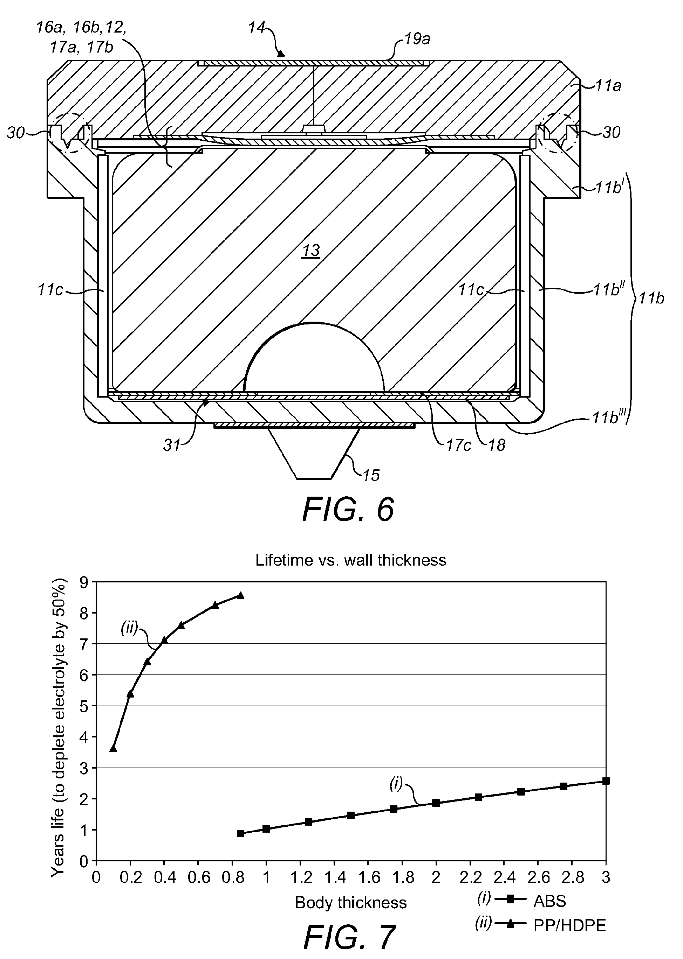

As shown most clearly in Figure 6, at least a portion of the walls 11b", 11b"' of the housing body 11b defining the cavity have a two-layer structure. The main body 11b is formed of a material suited to the forming and joining processes required for manufacturing the housing 11, such as ABS or Noryl™. The lid 11a is typically formed of the same material. Such materials have been found to be well adapted for joining by ultrasonic welding, and also laser drilling. This main body 11b provides a "first layer" of the cavity walls 11b", 11b"'. A "second layer" of material 11c is provided over at least some of the internal surface of the cavity walls 11b", 11b"'. The material making up layer 11c is selected to have a lower water vapour transport rate than that of the main body 11b of the housing (i.e. the "first layer"), preferably a substantially lower water vapour transport rate (e.g. 10 or 40 times lower). For example, suitable materials include metals such as copper or nickel, metal alloys, liquid crystal polymers (LCP) such as Vectra 140 I™, polypropylene (PP), high density polyethylene (HDPE), polyphenylene ether (PPE), polyphenylene sulphide (PPS), or a combination of any of these.

Line (ii) in Figure 7 shows the effect of the layer 11c, formed in this example of PP/HDPE, on the projected sensor lifetime where failure is due to drying-out of electrolyte. For comparison, line (i) shows the data from Figure 2, for conventional ABS cavity walls. It is clear from the results that even a very thin layer (e.g. a 0.1mm thickness) of the second material 11c will extend the drying-out lifetime of the sensor to beyond 3 years, thereby more than meeting the desired 2 year lifespan.

The advantage of providing a second layer of low water vapour transport rate is that existing sensor manufacturing processes (ultrasonic welding, laser drilling, etc) will be compatible with the basic housing 11 (e.g. an ABS moulding), while the 'skin' layer 11c provides the resistance to water vapour transfer that is required.

In the example shown, the second layer 11c covers the whole interior of the side walls 11b" of the cavity, but not the base wall 11b"' in which the vent 15 is formed, or the underside of the lid 11a. In other embodiments it may be preferred for the second layer 11c to cover a greater proportion of the cavity walls, including parts of the base wall 11b" or lid 11a if desired. In still further embodiments, a smaller proportion of the cavity wall surface may be covered by the layer 11c: for example, only selected portions of the side walls 11b" and/or base wall 11c"' need carry the second layer.

The second layer 11c is arranged so as not to cover regions 30 and 31 of the housing body 11b, which are to be subjected to manufacturing processes including ultrasonic welding (at region 30, to join the body 11b to the lid 11a) and laser drilling (at region 31, to produce the vent 15). By doing so, conventional processes can be implemented without the need for modification to take into account the dissimilar material of the second layer 11c. However, this may not be essential, depending on the particular materials selected and the processing techniques in place.

As demonstrated in Figure 7, the second layer 11c could be as thin as 0.1mm and still achieve an effective reduction in electrolyte depletion leading to a correspondingly long sensor lifetime. However, in practice it may be difficult to achieve a reliable 0.1mm coating, depending on the material selected and application technique used. Generally, the expected minimum thickness would be around 0.3 to 0.4mm for PP or HDPE and about 0.2mm for LCP or PPS. At such thickness the 'drying-out lifetime' is predicted to be over 5 years, and indeed a sensor will usually fail for other reasons before this time.

In the embodiment shown, the layer 11c is provided on the interior surface of the cavity, "inboard" of the housing 11, and this is generally preferred since the layer 11c (which as noted above may be very thin) is protected from external damage. However, with such a small increase in wall thickness (e.g. 0.2mm for a LCP or PPS coating), increasing the external geometry without significantly impacting the instrument becomes possible. As such, in other embodiments, the layer 11c could be provided on the exterior surface of the body 11b ("outboard") to equal effect. Again, the layer 11c could be arranged to cover any portion of the external cavity walls as desired. Whether inboard or outboard, the layer 11c need not be the outermost layer of the wall, as shown in the present embodiment, but could itself be covered by another layer.

In the present embodiment, if it is assumed that the external dimensions of the sensor 10 remain the same (as a conventional sensor) and the increased wall thickness is accommodated internally, then the available electrolyte and anode volumes will reduce as the thickness of layer 11c increases. This scenario is modelled in Figure 8. Here, line (i) is the projected lifetime for an increasing thickness of layer 11c (comprising PP, HDPE, LCP, or PPE for example) where failure is due to exhaustion of the anode 13, and line (ii) is the projected lifetime for an increasing thickness of layer 11c where failure is due to drying out of electrolyte.

Note that even with a 0.2mm thick second layer 11c, the reduction in anode and electrolyte volume is sufficiently low that the anode lifetime is still comfortably more than 2 years.

Such a 0.2mm layer 11c can be accommodated in a number of ways, including:
1. External - increasing the overall diameter of the housing 11 by 0.4mm, provided this additional size can be accommodated in the instrument in which the sensor 10 is to be incorporated.
2. Internal - reduction of the internal geometry by 0.4mm diameter will not seriously impact the volume of anode or electrolyte, or sensor life according to the above model.
3. Reducing the conventional 0.85 overall thickness of ABS moulding to 0.65mm, and using 0.2mm of PP/HDPE skin, on either inside or outside. This would maintain the exact geometry of the conventional sensor.

Where the layer 11c is provided on the internal surface of the cavity walls 11b", 11b"', it can be used to serve a further purpose. By forming the layer 11c from an electrically conductive material, such as a metal or conductive polymer, the layer 11c can form part of the electrical connection between the counter electrode 13 and the sensing circuit. In conventional sensors, this is achieved by providing a separate metal "cage" within which the anode 13 sits, connected to the external circuit. In the present embodiment, layer 11c can provide this function, thereby reducing the part count.

The layer 11c can be formed in a number of ways, the preferred technique depending on the material selected. Conveniently, the layer 11c is moulded over the housing body 11b by injection moulding or otherwise. This is suitable for most plastics materials and it is also possible to injection-mould layers of metal, such as copper. Alternatively, the layer 11c could be deposited onto the housing 11 using a vapour deposition technique or sputtering.

The housing body 11b is typically made by injection moulding a plastic, such as ABS and as such it is convenient to form the layer 11c in a second moulding step, overmoulding the housing 11 in a two-shot moulding process. If any processing regions 30, 31 are to be left uncovered, the overmoulding process may be designed so as to omit coverage of the second layer 11c in these regions, for example by masking selected areas. Alternatively, the second layer 11c could be applied over the processing regions 30, 31, and then removed by etching or mechanical means.

The electrode assembly can then be stacked within the housing body, which is sealed to housing lid 11a using an appropriate joining technique. The cavity is filled with electrolyte either prior to the application of lid 11a or after, if an entry port is provided (and subsequently sealed).

It should be noted that, whilst the above description focuses on the depletion of aqueous electrolytes due to water vapour transport, the same principle can be readily applied to the retention of other electrolyte types which are based on non-aqueous solvents, such as acetonitrile or dimethylformamide, which are both well known non-aqueous electrolytes with organic vapours. All that is required is that the material of the second layer 11c is selected as providing a low vapour transport rate for the solvent in question. In practice, the vapour transport mechanism through the cavity walls will depend on both the electrolyte and the wall material in use and so the interaction between these substances will need to be considered in order to select a suitable material for the second layer.

Figure 9 shows a schematic cross section through an exemplary toxic gas sensor 50, suitable (for example) for detecting carbon monoxide. Here, the plastics housing 51 comprises two parts, a lid 51 a and a body 51 b. An electrode stack comprising gas sensing electrode 52 and counter electrode 53 spaced by separators 57a and 57b is mounted within the housing 51 in use. The separators 57a and 57b act, possibly in conjunction with a wick component (not shown) to transport electrolyte from a reservoir contained in a cavity 55 within the body 51 b to both electrodes. Typically both electrodes comprise a catalyst dispersed on a backing tape.

The electrolyte cavity 55 is defined by cavity walls 51 b' and 51 b". The side walls 51 b' are typically cylindrical whereas the base wall 51 b" is circular. The base wall 51 b" includes an aperture 56 therethrough for filling the cavity with electrolyte.

To reduce electrolyte transfer through the walls of the housing 51, a second layer 54 is provided over selected portions of the interior surface of the cavity walls. In this case the second layer 54 is of a material which has a transfer rate lower than that of the housing material itself for the vapour of the electrolyte in question, e.g. acetonitrile or dimethylformamide. For example, a metal layer may be suitable. Layer thicknesses can be similar to those discussed above in relation to the first embodiment. As in the case of the first embodiment, in the sensor 50, the second layer 54 does not cover an area around aperture 56, so that the second layer material does not interfere with the process used to form the aperture.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. An electrochemical gas sensor for the detection of a target gas in an atmosphere, comprising a gas STRUCTURE sensing electrode and a counter electrode disposed within a housing, and a structure that connects the gas sensing electrode and the counter electrode to a sensing circuit, the housing being provided with an aperture for gas ingress and comprising walls defining a cavity containing electrolyte in fluid communication with the gas sensing electrode and counter electrode, wherein at least a portion of the walls defining the cavity comprise a first layer integral to the housing and a second layer thereon having a lower water vapour transport rate than that of the first layer, such that water vapour transport from the electrolyte to the atmosphere through the walls of the housing is reduced.

2. An electrochemical gas sensor according to claim 1, wherein a portion of the walls having the first and second layers comprises at least 50% of the walls defining the cavity.

3. An electrochemical gas sensor according to claim 1, wherein the portion of the walls having the first and second layers excludes predetermined processing regions of the walls.

4. An electrochemical gas sensor according to claim 3, wherein the processing regions comprise regions of the housing which are coupled to one or more external components by joints where the joints are selected from a class which includes heat welded joints or ultrasonic welded joints.

5. An electrochemical gas sensor according to claim 3, wherein the processing regions comprise at least in part laser drilled regions of the housing.

6. An electrochemical gas sensor according to claim 1, wherein the second layer of the wall is inboard of the first layer, relative to the housing.

7. An electrochemical gas sensor according to claim 1, wherein the second layer of the wall is outboard of the first layer relative to the housing.

8. An electrochemical gas sensor according to claim 1, wherein the second layer is thinner than the first layer of the wall in the portion of the walls having the first and second layers.

9. An electrochemical gas sensor according to claim 8, wherein the second layer is less than half as thick as the first layer of the wall in the portion of the walls having the first and second layers.

10. An electrochemical gas sensor according to claim 1, wherein the second layer of the wall has a thickness selected from a class which includes less than 1mm, between 0.05 mm and 0.5 mm, between 0.1 mm and 0.4 mm, and approximately 0.2 mm.

11. An electrochemical gas sensor according to claim 1, wherein the first layer of the wall in the portion of the walls having the first and second layers has a thickness selected from a class which includes between 0.5 mm and 2.5 mm, and on the order of 0.85 mm.

12. An electrochemical gas sensor according to claim 1, wherein the water vapour transport rate of the second layer is selected from a class which includes at least 10 times lower than that of the first layer and at least 40 times lower than that of the first layer.

13. An electrochemical gas sensor according to claim 1, wherein the second layer comprises an electrically conductive material and is electrically connected to the counter electrode, forming part of the structure that connects the electrodes to the sensing circuit.

14. An electrochemical gas sensor according to claim 1, wherein the housing and first layer of the walls comprises at least one of an acrylonitrile butadiene styrene (ABS) or a polyphenylene oxide (PPO) / polystyrene (PS) blend.

15. An electrochemical gas sensor according to claim 1, wherein the second layer of the walls comprises at least one of a liquid crystal polymer (LCP), polypropylene (PP), high density polyethylene (HDPE), polyphenylene ether (PPE), a metal, copper, nickel, or a metal alloy.

16. An electrochemical gas sensor according to claim 1, wherein the second layer is overmoulded onto the first layer of the walls.
